Europäisches Patentamt

European Patent Office

Office européen des brevets

(11) Numéro de publication: **0 123 216**
**A1**

(12) **DEMANDE DE BREVET EUROPEEN**

(21) Numéro de dépôt: **84104090.0**

(22) Date de dépôt: **12.04.84**

(51) Int. Cl.³: **G 02 B 5/172**
**G 02 B 5/16, H 01 B 11/18**

(30) Priorité: **18.04.83 FR 8306275**

(43) Date de publication de la demande:
**31.10.84 Bulletin 84/44**

(84) Etats contractants désignés:
**CH DE FR GB IT LI NL SE**

(71) Demandeur: **LES CABLES DE LYON Société anonyme dite:**
**170 quai de Clichy**
**F-92111 Clichy Cedex(FR)**

(72) Inventeur: **Le Davay, Louis**
**10, Parc du Château**
**F-78430 Louveciennes(FR)**

(74) Mandataire: **Weinmiller, Jürgen et al,**
**Zeppelinstrasse 63**
**D-8000 München 80(DE)**

(54) Câble composite à coaxial et fibres optiques.

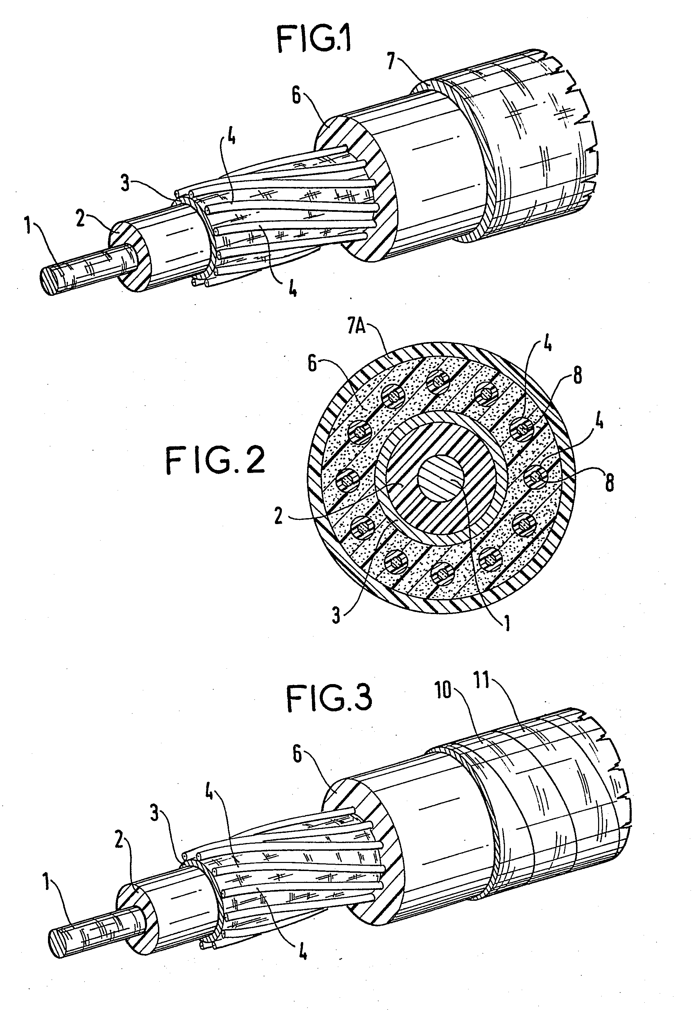

(57) Câble composite à coaxial (1, 2, 3) et fibres optiques 8(), comprenant un coaxial muni d'une gaine de protection (6). Les fibres optiques sont disposées individuellement ou par groupes dans des gaines de protection (4), avec ou sans jeu à l'intérieur de celles-ci, et sont noyées dans la gaine de protection du coaxial ou disposées entre celui-ci et sa gaine, puis elles-mêmes protégées par une gaine extérieure commune (7, 7A) ou par une armure en feuillard (10, 11, figure 3) enroulé autour d'elles.

FIG.1

EP 0 123 216 A1

## Câble composite à coaxial et fibres optiques

La présente invention concerne un câble composite à coaxial et fibres optiques, comprenant un coaxial muni d'une gaine de protection et des fibres optiques disposées individuellement ou par groupes dans cette gaine de protection. De tels câbles présentent un très grand intérêt pour les télécommunications.

On a déjà proposé dans la demande FR-A- 23 58 735 (ou le brevet USA-4 158 478) de disposer des fibres optiques noyées dans le diélectrique compris entre les conducteurs intérieur et extérieur d'un câble coaxial. On a également proposé dans la demande FR-A- 23 37 411, dans le cas d'un coaxial à diélectrique constitué par de l'air, dont les conducteurs intérieur et extérieur sont maintenus espacés à intervalles réguliers par des entretoises, de faire passer des fibres optiques dans des encoches pratiquées dans les entretoises, et de les y immobiliser par un jonc continu en matériau diélectrique s'étendant parallèlement à elles.

De tels dispositifs ne permettent pas un accès facile aux fibres optiques, lorsque l'on veut y parvenir, par exemple en cas de casse d'une ou plusieurs de celles-ci nécessitant une réparation, puisqu'ils nécessitent la destruction sur une certaine longueur du conducteur extérieur, et éventuellement d'une partie du diélectrique. Toute réparation est donc complexe et longue ; de même la sortie aux extrémités dans les connecteurs coaxiaux peut être difficile (désadaptation d'impédance en hyperfréquence).

On a aussi proposé dans la demande DE-A-2 931 534 un câble coaxial entouré d'une tresse formé par des fibres optiques de sens d'enroulement opposés autour de son conducteur extérieur, cette tresse étant entourée d'une gaine en matériau opaque, les fibres optiques y servant à détecter les avaries mécaniques du câble coaxial.

Un tel câble ne peut servir à la transmission normale de signaux par les fibres optiques, puisque celles-ci sont appelées à détecter et localiser les avaries du câble coaxial lui-même, et qu'elles sont nues et de ce fait endommagées dès que le câble subit la moindre avarie.

La présente invention a pour but de procurer une structure de câble composite à coaxial et fibres optiques, assurant la transmission de signaux à la fois par le coaxial et les fibres optiques, et dans laquelle une intervention sur les fibres optiques permet de laisser intact le coaxial.

Le cable composite selon l'invention est caractérisé en ce que ses fibres optiques sont entourées de gaines, et en ce que la gaine de protection du coaxial est elle-même entourée d'une enveloppe de protection.

Elle répond en outre de préférence à au moins l'une des caractéristiques suivantes :

- Les fibres optiques sont disposées avec jeu dans leurs gaines de protection.

- Les fibres optiques sont disposées sans jeu dans leurs gaines de protection.

- Les gaines de protection des fibres optiques sont noyées dans la gaine de protection du coaxial.

- Les gaines de protection des fibres optiques sont disposées au contact du pourtour du conducteur extérieur du coaxial.

- L'enveloppe de protection est une gaine extérieure en métal ou en polyéthylène.

- L'enveloppe de protection est une armure en feuillard rubanée autour de la gaine de protection du coaxial.

- La gaine de protection du coaxial est en polyéthylène plein ou cellulaire.

Il est décrit ci-après, à titre d'exemples et en référence aux figures du dessin annexé, des câbles composites selon l'invention.

La figure 1 représente en perspective avec arrachement partiel un câble composite dans lequel les fibres optiques sont disposées entre le conducteur extérieur du coaxial et sa gaine de protection.

La figure 2 représente en section droite un câble composite dans lequel les fibres optiques sont noyées dans la gaine de protection du coaxial, et entourées d'une gaine commune de protection.

La figure 3 représente un câble composite analogue à celui de la figure 1, mais dans lequel les fibres optiques sont entourées d'une armure formée par un feuillard de protection enroulé autour d'elles.

Dans la figure 1, le câble comprend un conducteur intérieur de coaxial 1, un diélectrique de coaxial 2, un conducteur extérieur 3. Des fibres optiques contenues dans des tubes en polyéthylène tels que 4, sont enroulées hélicoïdalement autour du conducteur extérieur 3. Elles sont recouvertes par la gaine de protection du conducteur extérieur 6, en polyéthylène plein (ou éventuellement cellulaire), puis par une gaine extérieure commune en plomb 7.

Dans la figure 2, les tubes tels que 4, contenant chacun une fibre optique telle que 8, sont noyés dans la gaine 6 en polyéthylène cellulaire de protection de conducteur extérieur, entourée par la gaine extérieure en polyéthylène plein 7A.

Dans la figure 3, la structure du câble est la même que dans la figure 1, mais la gaine extérieure commune en plomb est remplacée par une armure formée d'un feuillard d'acier rubané en couches successives telles que 10, 11 autour de la gaine 6 en polyéthylène du conducteur extérieur.

Bien que les structures de câble composite qui viennent d'être décrites en référence aux figures du dessin paraissent les formes de réalisation préférables de l'invention, on comprendra que diverses modifications peuvent leur être apportées sans sortir du cadre de l'invention. En particulier, on pourrait remplacer les gaines en polyéthylène par des gaines en une autre matière thermoplastique, telle que le polychlorure de vinyle ou le polypropylène, et les gaines en plomb par des gaines en aluminium extrudé ou soudé et ondulé.

REVENDICATIONS

1/ Câble composite à coaxial et fibres optiques, comprenant un coaxial (1, 2, 3) muni d'une gaine de protection (6), et des fibres optiques disposées individuellement ou par groupes dans la gaine de protection, caractérisé en ce que les fibres optiques sont entourées de gaines, et en ce que la gaine de protection du coaxial est elle-même entourée d'une enveloppe de protection (7, 7A, 10, 11).

2/ Câble selon la revendication 1, caractérisé en ce que les fibres optiques sont disposées avec jeu dans leurs gaines de protection.

3/ Câble selon la revendication 1, caractérisé en ce que les fibres optiques sont disposées sans jeu dans leurs gaines de protection.

4/ Câble selon l'une des revendications 1 à 3, caractérisé en ce que les gaines de protection des fibres optiques sont noyées dans la gaine de protection du coaxial.

5/ Câble selon l'une des revendications 1 à 3, caractérisé en ce que les gaines de protection des fibres optiques sont disposées au contact du pourtour du conducteur extérieur du coaxial.

6/ Câble selon l'une des revendications 1 à 5, caractérisé en ce l'enveloppe de protection est une gaine extérieure en métal ou en polyéthylène.

7/ Câble selon l'une des revendications 1 à 5, caractérisé en ce que l'enveloppe de protection est une armure en feuillard rubanée autour de la gaine de protection du coaxial.

8/ Câble selon l'une des revendications 1 à 7, caractérisé en ce que la gaine de protection du coaxial (6) est en polyéthylène plein ou cellulaire.

FIG.1

FIG.2

FIG.3

Office européen
des brevets

RAPPORT DE RECHERCHE EUROPEENNE

Q123216
Numéro de la demande

EP 84 10 4090

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | DE-A-2 931 534 (M.B.B.) <br> * Page 5, lignes 1-18; figures 1,5 * | 1 | G 02 B 5/172 <br> G 02 B 5/16 <br> H 01 B 11/18 |
| Y | DE-A-2 710 098 (SIEMENS) <br> * Revendications; figures * | 1 | |
| A | US-A-4 153 332 (S. LONGONI) <br> * Revendications; figures * | 1-3 | |
| A | GB-A-2 005 861 (W.E.C.) <br><br> * Revendications * | 1,3,4, 8 | |
| A,D | FR-A-2 358 735 (THOMSON) <br> * Revendications; figures * | 1 | |
| | | | DOMAINES TECHNIQUES RECHERCHES (Int. Cl. 3) |
| A,D | FR-A-2 337 411 (L.T.T.) <br> * Revendications * | 1 | G 02 B 5/16 <br> G 02 B 5/172 |

Le présent rapport de recherche a été établi pour toutes les revendications

| Lieu de la recherche | Date d'achèvement de la recherche | Examinateur |
|---|---|---|
| LA HAYE | 24-07-1984 | PFAHLER R. |